# EUROPEAN PATENT APPLICATION

(11) **EP 4 471 893 A1**
(43) Date of publication of application: **04.12.2024**
(21) Application number: 22920990.3
(22) Date of filing: 14.06.2022
(51) Int. Cl.: H01M 4/36, H01M 4/525

(54) **TERNARY POSITIVE ELECTRODE MATERIAL PRECURSOR, PREPARATION METHOD THEREFOR, TERNARY POSITIVE ELECTRODE MATERIAL, LITHIUM ION BATTERY AS WELL AS POSITIVE ELECTRODE, AND ELECTRIC DEVICE**

(30) Priority: 27.01.2022 CN 202210101448
(71) Applicant: CNGR Advanced Material Co., Ltd., Tongren, Guizhou 554300 (CN)
(72) Inventor: YIN, Shuo, Changsha, Hunan 410000 (CN); JI, Fangli, Changsha, Hunan 410000 (CN); YU, Zhonggao, Changsha, Hunan 410000 (CN); YIN, Wei, Changsha, Hunan 410000 (CN); REN, Yongzhi, Changsha, Hunan 410000 (CN); WU, Xingke, Changsha, Hunan 410000 (CN); ZHANG, Qin, Changsha, Hunan 410000 (CN); CHANG, Haizhen, Changsha, Hunan 410000 (CN); YAN, Xiaojing, Changsha, Hunan 410000 (CN)
(74) Representative: Locas, Davide
(86) International application number: PCT/CN2022/098559
(87) International publication number: WO 2023/142335

(57) **Abstract**

The present application relates to a ternary positive electrode material precursor and a preparation method thereof, a ternary positive electrode material, a lithium-ion battery, a positive electrode, and electric-involved equipment. The ternary positive electrode material precursor includes, sequentially from inside to outside, a core layer, a first intermediate layer, a second intermediate layer, and a shell layer, in which porosities of the core layer, the first intermediate layer, and the second intermediate layer increase in the mentioned order, and the shell layer has the smallest porosity or no porosity. The preparation method thereof includes: performing a first reaction of raw materials including a nickel-cobalt-manganese ternary metal salt mixed solution, a complexing agent, and a pH modifier to obtain a core layer; performing a second reaction by adjusting reaction conditions to form a first intermediate layer on a surface of the core layer; performing a third reaction by adjusting reaction conditions to form a second intermediate layer on a surface of the first intermediate layer; and performing a fourth reaction by adjusting reaction conditions to form a shell layer on a surface of the second intermediate layer. The ternary positive electrode material includes, sequentially from inside to outside, a layer A, a layer B, a layer C, and a layer D. The ternary positive electrode material precursor provided in the present application has excellent performance.

## Description

### Cross-reference to Related Applications

The present application claims priority to Chinese patent application No. 202210101448.7, entitled "Ternary Positive Electrode Material Precursor and Preparation Method thereof, Ternary Positive Electrode Material, Lithium-ion Battery, Positive Electrode, and Electric-involved Equipment", filed to the China Patent Office on January 27, 2022, the entire content of which is incorporated herein by reference.

### Technical Field

The present application relates to the field of lithium-ion batteries, and in particular, to a ternary positive electrode material precursor and a preparation method thereof, a ternary positive cathode material, a lithium-ion battery, a positive cathode, and electric-involved equipment.

### Background Art

In 2021, China proposed that achieve carbon dioxide peaking before 2030, and strives to achieve carbon neutrality before 2060. However, the world's automobile industry is developing rapidly, and vehicle exhaust emission directly affects carbon emission. Therefore, as the future direction of development of the automobile industry, green new energy vehicles use lithium batteries as the core power of new energy vehicles. Positive electrode precursor materials, as the most important component of lithium batteries, has always been the technical core. At present, the most common ternary precursors on the market are 5-series and 6-series of ternary precursors, but their low capacitance limits their application in new energy vehicles.

Various precursor manufacturers have successively developed high-nickel precursor products to improve capacity of the batteries and prolong service life of the batteries. Large particle-sized high-nickel precursors, which are generally synthesized by batch method, have extremely narrow particle size distribution, and the particle structures are highly uniform.

At present, in the field of ternary precursors for lithium batteries, the interior of ternary precursor particles is generally a dense structure with few pores, and the internal distribution is uneven. The battery prepared from such ternary precursor particles has a single diffusion path of lithium ions, a large diffusion resistance, and an insufficient rate capability. In addition, the battery has always a problem that, owing to repeated charging and discharging, the strength of particle structures is unstable, which is likely to cause cracking of particle units, resulting in a short service life, low capacity, and poor safety performance of the lithium secondary battery.

Therefore, the prominent problem that the ternary precursor particles have a simple internal structure, large diffusion resistance, and unstable particle strength and cracking of the particles, resulting in poor cycle performance, rate capability, and safety performance of the batteries, has become technical problems to be overcome urgently.

### Summary

An object of the present application is to provide a ternary positive electrode material precursor and a preparation method thereof, a ternary positive electrode material, a lithium-ion battery, a positive electrode, and electric-involved equipment, so as to solve the above problem.

To achieve the above object, the present application adopts the technical solution of:
a ternary positive electrode material precursor including, sequentially from inside to outside, a core layer, a first intermediate layer, a second intermediate layer, and a shell layer, wherein a porosity of the core layer, the first intermediate layer, and the second intermediate layer increases in the mentioned order, and the shell layer has the smallest porosity or no porosity.

Preferably, the porosity of the core layer is 1.40%-7.96%, the porosity of the first intermediate layer is 2.10%-8.37%, the porosity of the second intermediate layer is 4.57%-16.72%, and the porosity of the shell layer is less than or equal to 1%.

Preferably, the porosity of the core layer is 2.0%-4.0%, the porosity of the first intermediate layer is 3.0%-5.0%, the porosity of the second intermediate layer is 7.35%-10.32%, and the porosity of the shell layer is less than or equal to 0.5%.

Preferably, each of the layers of the ternary positive electrode material precursor has an average thickness less than or equal to 3 µm.

Preferably, the core layer has a diameter of 1.0 µm-3.0 µm, the first intermediate layer has an average thickness of 0.2 µm-2.0 µm, the second intermediate layer has an average thickness of 1 µm-2.5 µm, and the shell layer has an average thickness of 0.5 µm-1.5 µm.

Preferably, primary particles forming the ternary positive electrode material precursor are distributed in a shape of loosely intersecting needle strips from inside to outside along a radial direction thereof.

Preferably, the core layer is spherical as a whole.

Preferably, primary particles in the shell layer are in a shape of needle strip along the radial direction of the ternary positive electrode material precursor.

Preferably, the ternary positive electrode material precursor has an average particle size of 12 µm-15 µm.

Preferably, D95/D50 is 1.0-1.6.

Preferably, the ternary positive electrode material precursor has a BET (specific surface area) of 11 m²/g-17 m²/g.

Preferably, a half-peak width α of a (001) peak at a diffraction angle 2θ of 19.2±1° is less than or equal to 0.6.

Preferably, the half-peak width α is 0.43-0.53.

Preferably, a half-peak width β of a (101) peak at a diffraction angle 2Θ of 38.5±1° is less than or equal to 0.7.

Preferably, the half-peak width β is 0.48-0.58.

Preferably, a ratio of the half-peak width β to the half-peak width α is greater than or equal to 1.02, and a peak intensity ratio I (001/101) is 1.0-1.2.

Preferably, the ratio of the half-peak width β to the half-peak width α is 1.02-1.25.

Preferably, the ternary positive electrode material precursor has a general chemical formula NiₓCo_{y}Mn_{z}(OH)₂, where 0.8≤x≤0.98, 0.01≤y<0.18, 0.01≤z<0.17, and x+y+z=1.

The present application also provides a preparation method of the ternary positive electrode material precursor, including:
performing a first reaction of raw materials including a nickel-cobalt-manganese ternary mixed solution, a complexing agent, and a pH modifier to obtain a core layer;
performing a second reaction by adjusting reaction conditions to form a first intermediate layer on a surface of the core layer;
performing a third reaction by adjusting reaction conditions to form a second intermediate layer on a surface of the first intermediate layer; and
performing a fourth reaction by adjusting reaction conditions to form a shell layer on a surface of the second intermediate layer.

Preferably, the first reaction, the second reaction, the third reaction, and the fourth reaction are all carried out under stirring, and the stirring speeds decrease in the mentioned order.

Preferably, the stirring speed for the first reaction is 200 r/min-240 r/min, the stirring speed for the second reaction is 180 r/min-230 r/min, the stirring speed for the third reaction is 100 r/min-200 r/min, and the stirring speed for the fourth reaction is 40 r/min-100 r/min.

Preferably, addition amounts of the nickel-cobalt-manganese ternary mixed solution during the first reaction, the second reaction, the third reaction, and the fourth reaction increase in the mentioned order.

Preferably, during the first reaction, the addition amount of the nickel-cobalt-manganese ternary mixed solution is 80 L/h-550 L/h; during the second reaction, the addition amount of the nickel-cobalt-manganese ternary mixed solution is 150 L/h-650 L/h; and during the third reaction and the fourth reaction, the addition amount of the nickel-cobalt-manganese ternary mixed solution is 150 L/h-750 L/h.

Preferably, during the first reaction, the second reaction, the third reaction and the fourth reaction, the addition amounts of the nickel-cobalt-manganese ternary mixed solution in these reaction processes increase stepwise.

Preferably, the proportion of the stepped increase is 10%-100%.

Preferably, during the first reaction, the second reaction, and the third reaction, the pH of the system decreases gradually; and the pH of the system during the fourth reaction is higher than that of the third reaction.

Preferably, during the first reaction, the second reaction, the third reaction, and the fourth reaction, the pH of the system ranges from 10 to 12.

Preferably, the pH of the system during the fourth reaction is 0.10-0.30 higher than that of the third reaction.

Preferably, a concentration of the nickel-cobalt-manganese ternary mixed solution is 90-130 g/L.

Preferably, the complexing agent includes one or more of aqueous ammonia, EDTA, ethylenediamine, sodium citrate, and urea.

Preferably, the complexing agent is aqueous ammonia with a mass fraction of 15%-35%.

Preferably, in the first reaction, the second reaction, the third reaction, and the fourth reaction, a concentration of the aqueous ammonia in the system is 2.5 g/L-6.5 g/L.

Preferably, the concentration of the aqueous ammonia in the system during the third reaction and the fourth reaction is higher than the concentration of the aqueous ammonia during the second reaction by 1.0-3.0 g/L.

Preferably, the pH modifier includes one or more of sodium hydroxide, potassium hydroxide, sodium bicarbonate, and sodium carbonate.

Preferably, the pH modifier is an aqueous sodium hydroxide solution with a mass fraction of 25%-50%.

The present application also provides a ternary positive electrode material including, sequentially from inside to outside, a layer A, a layer B, a layer C, and a layer D, wherein porosities of the layer A, the layer B, and the layer C increase in the mentioned order, and the D layer has the smallest porosity or no porosity.

Preferably, the ternary positive electrode material is obtained by firing the ternary positive electrode material precursor.

The present application also provides a positive electrode for a lithium-ion battery including the ternary positive electrode material.

The present application also provides a lithium-ion battery including the positive electrode for a lithium-ion battery.

The present application also provides electric-involved equipment including the lithium-ion battery.

Compared with the prior art, the advantageous effects of the present application include the following.

Compared with the existing ternary precursor having a dense internal structure, the ternary positive electrode material precursor provided in the present application includes, sequentially from inside to outside, a core layer, a first intermediate layer, a second intermediate layer, and a shell layer, in which porosity of the core layer, the first intermediate layer, and the second intermediate layer increases in the mentioned order, and the shell layer has the smallest porosity or no porosity. The structure of the ternary positive electrode material precursor of the present application including three internal layers having gradually increased porosity provides relatively more diffusion paths and thus more lithium-ion transport channels, which reduces the diffusion resistance of lithium ions and effectively increases the diffusion rate of lithium ions. Therefore, the charge and discharge performance, rate capability, and cycle performance are improved. The shell layer having the smallest porosity or no porosity is of a dense and less-porous shell structure. Consequently, the ternary positive electrode material precursor exhibits a form having a loose inner part and a tight outer part, which can withstand the stress generated by charging and discharging. The dense and less-porous shell can maintain the structural stability. The ternary positive electrode material precursor having an internal structure meeting the specific ranges of porosity and a less-porous and dense structure of shell layer has increased particle strength. During the charging and discharging process of the battery, the particles are not prone to cracking, thereby increasing the cycle retention rate and service life, and therefore, the battery achieves excellent performance.

In the preparation method of the ternary positive electrode material precursor provided by the present application, the above-mentioned ternary positive electrode material precursor with a special four-layer structure can be stably prepared by a solution co-precipitation method, via the first reaction, the second reaction, the third reaction, and the fourth reaction. The preparation method has low cost and a stable process.

The ternary positive electrode material, the positive electrode for a lithium-ion battery, and the lithium-ion battery provided by the present application have good electrical performance, long service life, and high safety and stability.

### Brief Description of Drawings

In order to illustrate the technical solutions of the examples of the present application more clearly, the accompanying drawings to be used for the examples will be briefly introduced as follows. It should be appreciated that the following drawings show some examples of the present application merely, and therefore should not be construed as limiting the scope of the present application.
FIG. 1 is a schematic structural diagram of a ternary positive electrode material precursor provided by the present application;
FIG. 2 is a sectional SEM image of the ternary positive electrode material precursor obtained in Example 1;
FIG. 3 is a high-magnification SEM (scanning electron microscope) image of the ternary positive electrode material precursor obtained in Example 1;
FIG. 4 is a local high-magnification SEM image of the ternary positive electrode material precursor obtained in Example 1;
FIG. 5 is a high-magnification SEM image of the ternary positive electrode material precursor obtained in Example 2;
FIG. 6 is a local high-magnification SEM image of the ternary positive electrode material precursor obtained in Example 2;
FIG. 7 is an XRD spectrum of the ternary positive electrode material precursors obtained in Examples 1, 2, 3, and 4;
FIG. 8 is a sectional SEM image of the ternary positive electrode material precursor obtained in Example 2;
FIG. 9 is a sectional SEM image of the ternary positive electrode material precursor obtained in Example 3;
FIG. 10 is a sectional SEM image of the ternary positive electrode material precursor obtained in Example 4;
FIG. 11 is a sectional SEM image of the ternary positive electrode material precursor obtained in Comparative Example 1;
FIG. 12 is a high-magnification SEM image of the ternary positive electrode material precursor obtained in Comparative Example 1;
FIG. 13 is a local high-magnification SEM image of the ternary positive electrode material precursor obtained in Comparative Example 1;
FIG. 14 is a XRD spectrum of the ternary positive electrode material precursor obtained in Comparative Example 1;
FIG. 15 is a sectional SEM image of the ternary positive electrode material precursor obtained in Comparative Example 2;
FIG. 16 is a XRD spectrum of the ternary positive electrode material precursor obtained in Comparative Example 2;
FIG. 17 is a sectional SEM image of the ternary positive electrode material precursor obtained in Comparative Example 3;
FIG. 18 is a XRD spectrum of the ternary positive electrode material precursor obtained in Comparative Example 3; and
FIG. 19 is a sectional SEM image of the ternary positive electrode material precursor obtained in Comparative Example 4.

### Detailed Description of the Embodiments

Terms used herein are defined as follows.

"Prepared by" is synonymous with "including". As used herein, the terms "including", "comprising", "having", "containing", and any other variations thereof, are intended to encompass non-exclusive inclusion. For example, a composition, step, method, product, or device including the listed elements is not necessarily limited to these elements, but may include other elements not expressly listed or elements inherent to such a composition, step, method, product, or device.

The conjunction "consisting of" excludes any unspecified element, step, or component. If used in a claim, this phrase makes the claim closed to exclude materials other than those described, but with the exception of conventional impurities associated therewith. When the phrase "consisting of" appears in a clause in the body of a claim rather than immediately following the subject matter, it limits merely the elements described in this clause, and other elements are not excluded from the claim as a whole.

When an amount, concentration, or other value or parameter is expressed as a range, preferred range, or a range defined by a series of preferred upper limits and preferred lower limits, it should be understood that all ranges defined by pairing of any upper limit or preferred value of a range and any lower limit or preferred value of the range are specifically disclosed, whether or not the ranges are individually disclosed. For example, when a range of "1-5" is disclosed, the described range should be construed to include the ranges of "1-4", "1-3", "1-2", "1-2 and 4-5" , "1-3 and 5", etc. When a numerical range is described herein, the range is intended to include the endings and all integers and fractions within the range, unless stated otherwise.

In these examples, the parts and percentages are both by mass, unless otherwise indicated.

"Part by mass" refers to a basic measurement unit that represents the mass ratio relation of multiple components, and 1 part may represent any unit mass, for example, 1 g, 2.689 g, and the like. Assuming that the A component is in a parts by mass, and the B component is in b parts by mass, then the ratio of the mass of the A component to the mass of the B component is a:b, or the mass of the A component is aK, and the mass of the B component is bK (K is an arbitrary number, representing a multiple factor). Unmistakably, the sum of parts by mass of all components is not limited to 100 parts, unlike mass fraction.

"And/or" is used to indicate that one or both of the stated circumstances may occur, for example, A and/or B includes (A and B) and (A or B).

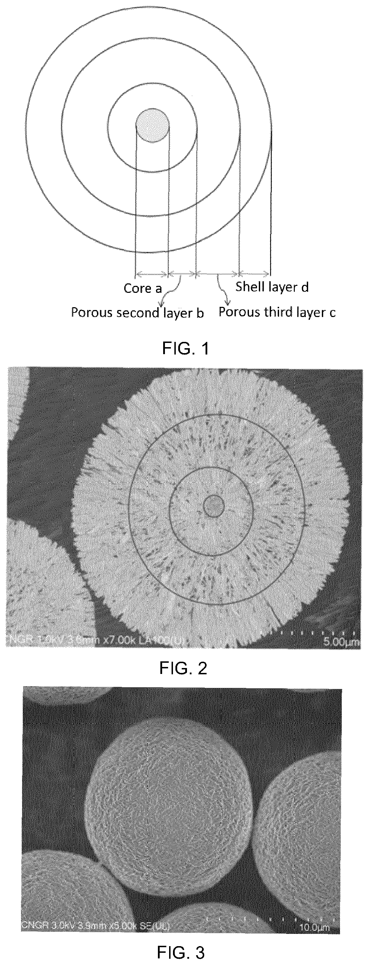

As shown in FIG. 1, the present application provides a ternary positive electrode material precursor including, sequentially from inside to outside, a core layer (core a), a first intermediate layer (porous second layer b), and a second intermediate layer (porous third layer c), and a shell layer (shell layer d), in which porosity of the core layer, the first intermediate layer, and the second intermediate layer increases in the mentioned order, and the shell layer has the smallest porosity or no porosity.

It can be seen from FIG. 1 that the first intermediate layer is located outside the core layer and covers the core layer, the second intermediate layer is located outside the first intermediate layer and covers the first intermediate layer and the core layer, and the shell layer is the outermost layer and covers the second intermediate layer and the first intermediate layer and the core layer therein.

In an optional embodiment, the porosity of the core layer is 1.40%-7.96%, the porosity of the first intermediate layer is 2.10%-8.37%, the porosity of the second intermediate layer is 4.57%-16.72%, and the porosity of the shell layer is less than or equal to 1%.

In an optional embodiment, the porosity of the core layer is 2.0%-4.0%, the porosity of the first intermediate layer is 3.0%-5.0%, the porosity of the second intermediate layer is 7.35%-10.32%, and the porosity of the shell layer is less than or equal to 0.5%.

In the present application, the porosity characteristic is evaluated by directly determining the pore area and sectional area of each region using image analysis software (ImageJ), and calculating the porosities of different regions from the equation "porosity = pore area of each region/sectional area of each region × 100%". The porosity herein is characterized by this method.

The porosities of the three internal layers of the ternary positive electrode material precursor gradually increase and meet the above-mentioned porosity range. This structure provides relatively more diffusion paths and thus more lithium ions transport channels, which reduces the diffusion resistance of lithium ions and effectively increases the diffusion rate of lithium ions. Therefore, the charge and discharge performance, rate capability, and cycle performance are improved. The shell layer having the smallest porosity or no porosity is a dense and less-porous shell structure. Consequently, the ternary positive electrode material precursor exhibits a form having a loose inner part and a tight outer part, which can withstand the stress generated by charging and discharging. The dense and less-porous shell can maintain the structural stability. In addition, the ternary positive electrode material precursor having an internal structure satisfying the specific ranges of porosity and a less-porous and dense structure of shell layer has increased particle strength. During the charging and discharging process of the battery, the particles are not prone to cracking, thereby increasing the capacity retention rate and service life of the battery, and therefore, the battery achieves excellent performance.

Optionally, the porosity of the core layer may be 1.40%, 2%, 3%, 4%, 5%, 6%, 7%, 7.96%, or any value of 1.40% to 7.96%; the porosity of the first intermediate layer may be 2.10%, 3%, 4%, 5%, 6%, 7%, 8%, 8.37%, or any value of 2.10% to 8.37%; the porosity of the second intermediate layer may be 4.57%, 5%, 6%, 7%, 8%, 9%, 10%, 11%, 12%, 13%, 14%, 15%, 16%, 16.72% or, any value of 4.57% to 16.72%; and the porosity of the shell layer may be 0.05%, 0.1%, 0.2%, 0.3%, 0.4%, 0.5%, 0.6%, 0.7%, 0.8%, 0.9%, 1%, or any value less than or equal to 1%.

In an optional embodiment, each of the layers of the ternary positive electrode material precursor has an average thickness less than or equal to 3 µm.

In an optional embodiment, the core layer has a diameter of 1.0 µm-3.0 µm, the first intermediate layer has an average thickness of 0.2 µm-2.0 µm, the second intermediate layer has an average thickness of 1 µm-2.5 µm, and the shell layer has an average thickness of 0.5 µm-1.5 µm.

Optionally, the diameter of the core layer may be 1.0 µm, 1.5 µm, 2 µm, 2.5 µm, 3.0 µm, or any value of 1.0 µm to 3.0 µm; the average thickness of the first intermediate layer may be 0.2 µm, 0.5 µm, 1µm, 1.5µm, 2.0 µm, or any value of 0.2 µm to 2.0 µm; the average thickness of the second intermediate layer may be 1 µm, 1.5 µm, 2 µm, 2.5 µm, or any value of 1 µm to 2.5 µm; and the average thickness of the shell layer may be 0.5 µm, 1 µm, 1.5 µm, or any value of 0.5 µm to 1.5 µm.

The average thicknesses of the internal layers of the particles are determined according to the particle size at the end point of each reaction step described above.

In an optional embodiment, primary particles in the ternary positive electrode material precursor are distributed in a shape of loosely intersecting needle strips from inside to outside along a radial direction thereof.

In an optional embodiment, the core layer is spherical as a whole.

In an optional embodiment, primary particles in the shell layer are in a shape of needle strip along the radial direction of the ternary positive electrode material precursor.

In an optional embodiment, the ternary positive electrode material precursor has an average particle size of 12 µm-15 µm.

In an optional embodiment, D95/D50 is 1.0-1.6.

Optionally, the D95/D50 of the ternary positive electrode material precursor may be 1, 1.1, 1.2, 1.3, 1.4, 1.5, 1.6, or any value of 1 to 1.6.

The ternary positive electrode material precursor has a narrow particle size distribution, the particles are uniformly distributed, and thus a better electrical performance is achieved.

When the primary particles on the surface in the particles of the ternary positive electrode material precursor satisfy the above particle size range and particle size distribution, and the primary particles are uniformly distributed in the shape of loosely intersecting needle strips. When used in a positive electrode material of a battery, the ternary positive electrode material precursor reduces the diffusion resistance of lithium ions and facilitates lithium ions transport to an extent.

In an optional embodiment, the ternary positive electrode material precursor has a BET of 11 m²/g-17 m²/g.

Optionally, the BET of the ternary positive electrode material precursor may be 11 m²/g, 12 m²/g, 13 m²/g, 14 m²/g, 15 m²/g, 16 m²/g, 17 m²/g, or any value of 11 m²/g to 17 m²/g.

In an optional embodiment, a half-peak width α of the (001) peak at a diffraction angle 2Θ of 19.2±1° is less than or equal to 0.6.

In an optional embodiment, the half-peak width α is 0.43-0.53.

Optionally, the half-peak width α may be 0.3, 0.4, 0.43, 0.5, 0.6, or any value less than or equal to 0.6.

In an optional embodiment, a half-peak width β of the (101) peak at a diffraction angle 2θ of 38.5±1° is less than or equal to 0.7.

In an optional embodiment, the half-peak width β is 0.48-0.58.

Optionally, the half-peak width β may be 0.3, 0.4, 0.48, 0.5, 0.58, 0.6, 0.7, or any value less than or equal to 0.7.

In an optional embodiment, the ratio of the half-peak width β to the half-peak width α is greater than or equal to 1.02, and the peak intensity ratio I (001/101) is 1.0-1.2.

In an optional embodiment, the ratio of the half-peak width β to the half-peak width α is 1.02-1.25.

Optionally, the ratio of the half-peak width β to the half-peak width α may be 1.02, 1.1, 1.2, 1.25, or any value of 1.0 to 1.25.

The (001) crystal surface has a small half-peak width and high peak intensity, the grains preferentially grow on the (001) crystal surface, and thus the (001) crystal surface has high crystallinity, which affects the growth of primary particles. The active material precursor prepared therewith have excellent structural stability. In addition, the peak intensity of the (001) surface of the precursor material is greater than that of the (101) surface, and the crystallinity of the grains at the (001) peak is dominant. In combination with the pore distribution of the internal structure, the precursor material, when formed into the positive electrode active material, can exert excellent output characteristics, cycle performance, and rate capability and thus improve battery capacity.

In an optional embodiment, the ternary positive electrode material precursor has a general chemical formula NiₓCo_{y}Mn_{z}(OH)₂, where 0.8≤x≤0.98, 0.01≤y<0.18, 0.01≤z<0.17, and x+y+z=1.

The present application also provides a preparation method of the ternary positive electrode material precursor, including:
performing a first reaction of raw materials including a nickel-cobalt-manganese ternary mixed solution, a complexing agent, and a pH modifier to obtain a core layer;
performing a second reaction by adjusting reaction conditions to form a first intermediate layer on a surface of the core layer;
performing a third reaction by adjusting reaction conditions to form a second intermediate layer on a surface of the first intermediate layer; and
performing a fourth reaction by adjusting reaction conditions to form a shell layer on a surface of the second intermediate layer.

In an optional embodiment, the first reaction, the second reaction, the third reaction, and the fourth reaction are all carried out under stirring, and the stirring speeds for the reactions decrease in the mentioned order.

In an optional embodiment, the stirring speed for the first reaction is 200 r/min-240 r/min, the stirring speed for the second reaction is 180 r/min-230 r/min, and the stirring speed for the third reaction is 100 r/min-200 r/min, and the stirring speed for the fourth reaction is 40 r/min-100 r/min.

The stirring speed for the fourth reaction is decreased to reduce the supersaturation of the solution, which is conducive to the growth of the crystal at grain boundaries. Moreover, increasing the pH of the system during the fourth reaction is conducive to stabilizing the strength of the crystal grains, thereby forming a dense outer shell structure and improving the structural stability.

The average thicknesses of the internal layers of the particles are determined according to the particle size at the end point of each reaction step described above.

Optionally, the stirring speed for the first reaction may be 200 r/min, 210 r/min, 220 r/min, 230 r/min, 240 r/min, or any value of 200 r/min to 240 r/min; the stirring speed for the second reaction may be 180 r/min, 190 r/min, 200 r/min, 210 r/min, 220 r/min, 230 r/min, or any value of 180 r/min to 230 r/min; the stirring speed for the third reaction may be 100 r/min, 110 r/min, 120 r/min, 130 r/min, 140 r/min, 150 r/min, 160 r/min, 170 r/min, 180 r/min, 190 r/min, 200 r/min, or any value of 100 r/min to 200 r/min; and the stirring speed for the fourth reaction may be 40 r/min, 50 r/min, 60 r/min, 70 r/min, 80 r/min, 90 r/min, 100 r/min, or any value of 40 r/min to 100 r/min.

In an optional embodiment, addition amounts of the nickel-cobalt-manganese ternary mixed solution during the first reaction, the second reaction, the third reaction, and the fourth reaction increase in the mentioned order.

In an optional embodiment, during the first reaction, the addition amount of the nickel-cobalt-manganese ternary mixed solution is 80 L/h-550 L/h; during the second reaction, the addition amount of the nickel-cobalt-manganese ternary mixed solution is 150 L/h-650 L/h; and during the third reaction and the fourth reaction, the addition amount of the nickel-cobalt-manganese ternary mixed solution is 150 L/h-750 L/h.

Optionally, during the first reaction, the addition amount of the nickel-cobalt-manganese ternary mixed solution may be 80 L/h, 100 L/h, 200 L/h, 300 L/h, 400 L/h, 500 L/h, 550 L/h, or any value of 80 L/h to 550 L/h; during the second reaction, the addition amount of the nickel-cobalt-manganese ternary mixed solution may be 150 L/h, 200 L/h, 300 L/h, 400 L/h, 500 L/h, 600 L/h, 650 L/h, or any value of 150 L/h to 650 L/h; and during the third reaction and the fourth reaction, the addition amount of the nickel-cobalt-manganese ternary mixed solution may be 150 L/h, 200 L/h, 300 L/h, 400 L/h, 500 L/h, 600 L/h, 700 L/h, 750 L/h, or any value of 150 L/h-750 L/h.

In an optional embodiment, during the first reaction, the second reaction, the third reaction, and the fourth reaction, the addition amounts of the nickel-cobalt-manganese ternary mixed solution in these reaction processes increase stepwise.

The four-layer structure of the ternary positive electrode material precursor is obtained by forming internal multi-layered porous structure, in which the materials in the first, second and third steps are used respectively as seed crystal and undergo further reaction, and the ternary metal flow rates in the respective steps increase stepwise, and forming a dense structure of shell layer by adjusting the conditions for the fourth reaction. The porosity of the internal structure of the particles of ternary positive electrode material precursor is determined according to the adjustment for pH value, ammonia concentration, and flow rate ratio of the ternary metal salt mixed solution as the raw material in each of the above steps.

In an optional embodiment, the stepwise increase ratio is 10%-100%.

Optionally, the stepwise increase ratio may be 10%, 20%, 30%, 40%, 50%, 60%, 70%, 80%, 90%, 100%, or any value of 10% to 100%.

In an optional embodiment, during the first reaction, the second reaction, and the third reaction, pH of the system decreases gradually; and pH of the system during the fourth reaction is higher than that of the third reaction.

In an optional embodiment, during the first reaction, the second reaction, the third reaction, and the fourth reaction, the pH of the system ranges from 10 to 12.

In an optional embodiment, the pH of the system during the fourth reaction is 0.10-0.30 higher than that of the third reaction.

Optionally, the pH of the system during the fourth reaction is higher than that of the third reaction by 0.1, 0.2, 0.3, or any value of 0.10 to 0.30.

Adjusting the flow rate ratio of the metal salt mixed solution as the raw material and pH causes rapid growth of grains in the second and third steps in a short period of time. The porosity of the inner part and the average thicknesses of the layers are determined based on the reaction time, the pH value, and the flow rate ratio of the metal salt mixed solution as the raw material in each step above.

In an optional embodiment, a concentration of the nickel-cobalt-manganese ternary mixed solution is 90-130 g/L.

Optionally, the concentration of the nickel-cobalt-manganese ternary mixed solution may be 90 g/L, 100 g/L, 110 g/L, 120 g/L, 125 g/L, 130 g/L, or any value of 90 g/L to 130 g/L.

In an optional embodiment, the complexing agent includes one or more of aqueous ammonia, EDTA, ethylenediamine, sodium citrate, and urea.

In an optional embodiment, the complexing agent is aqueous ammonia with a mass fraction of 15%-35%.

Optionally, the mass fraction of the aqueous ammonia may be 15%, 20%, 25%, 30%, 35% or any value of 15% to 35%.

In an optional embodiment, in the first reaction, the second reaction, the third reaction, and the fourth reaction, a concentration of the aqueous ammonia in the system is 2.5 g/L-6.5 g/L.

Optionally, in the first reaction, the second reaction, the third reaction, and the fourth reaction, the concentration of the aqueous ammonia in the system may be 2.5 g/L, 3.0 g/L, 3.5 g/L, 4.0 g/L, 4.5 g/L, 5.0 g/L, 5.5 g/L, 6.0 g/L, 6.5 g/L, or any value of 2.5 g/L to 6.5 g/L.

In an optional embodiment, the concentration of the aqueous ammonia in the system during the third reaction and the fourth reaction is higher than the concentration of the aqueous ammonia during the second reaction by 1.0-3.0 g/L.

Optionally, the concentration of the aqueous ammonia in the system during the third reaction and the fourth reaction is higher than the concentration of the aqueous ammonia during the second reaction by 1.0 g/L, 1.5 g/L, 2.0 g/L, 2.5 g/L, 3.0 g/L, or any value of 1.0 g/L to 3.0 g/L.

In an optional embodiment, the pH modifier includes one or more of sodium hydroxide, potassium hydroxide, sodium bicarbonate, and sodium carbonate.

In an optional embodiment, the pH modifier is an aqueous sodium hydroxide solution with a mass fraction of 25%-50%.

Optionally, the mass fraction of the aqueous sodium hydroxide solution may be 25%, 30%, 35%, 40%, 45%, 50%, or any value of 25% to 50%.

The present application also provides a ternary positive electrode material including, sequentially from inside to outside, a layer A, a layer B, a layer C, and a layer D, in which porosities of the layer A, the layer B, and the layer C increase in the mentioned order, and the D layer has the smallest porosity or no porosity.

In an optional embodiment, the ternary positive electrode material is obtained by firing the ternary positive electrode material precursor.

For example, the ternary positive electrode material is obtained by firing a lithium source compound and the ternary positive electrode material precursor described above as raw materials.

The present application also provides a positive electrode for a lithium-ion battery, the positive electrode including the ternary positive electrode material.

The present application also provides a lithium-ion battery including the positive electrode for a lithium-ion battery.

The present application also provides electric-involved equipment including the lithium-ion battery.

The embodiments of the present application will be described in detail below with reference to specific examples, but those skilled in the art would appreciate that the following examples are only used to illustrate the present application and should not be construed as limiting the scope of the present application. If the specific conditions are not indicated in the examples, the examples are carried out according to the conventional conditions or the conditions recommended by the manufacturers. The used reagents or instruments without indication of the manufacturer are conventional products that can be purchased from the market.

### Example 1

In this example, a high-nickel ternary positive electrode material precursor was prepared, which has a four-layer structure including porous inner parts and a dense shell layer (a core, two intermediate layers, and a shell). The high-nickel ternary positive electrode material precursor has a chemical formula Ni_{0.85}Co_{0.10}Mn_{0.05}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 100 g/L was prepared using metal raw materials at a molar ratio of nickel, cobalt, and manganese of 0.85:0.10:0.05.

Caustic soda liquid with a mass fraction of 32% and 20% ammonia aqueous solution were used; and 10 m³ stainless steel reactor and 1.3 m³ stainless steel concentrator were used.

2. First step was production of inner core A by co-precipitation. 5.0 m³ of pure water was added to a reactor 1# as a substrate liquid, aqueous ammonia and caustic soda liquid (aqueous sodium hydroxide solution) were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step was formation of porous second intermediate layer structure B by co-precipitation. 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 450 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step was formation of porous third intermediate layer C. 5.5 m³ of pure water was added to a reactor 3#, 75 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 5.5g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 520 L/h. The starting pH was controlled at 10.50.

5. Fourth step was formation of dense shell D. On the basis of the reaction conditions of the third step, the stirring speed for the end-point reaction was adjusted to 60 r/min, and the ending pH was controlled at 10.65. Namely, the stirring speed was reduced, and the pH was raised. In the fourth reaction step, reduction of the stirring speed and the supersaturation of the solution is advantageous for the crystal growth at grain boundaries, and increase of the pH of the system during the fourth reaction is advantageous to stabilize the strength of the crystal grains, thereby forming a dense outer shell structure of the crystal surface.

When a certain liquid level was reached in the reactor, the concentrator was turned on, a slurry was circulated, and a mother liquor was discharged out. When the slurry particle size D50 reached 13.0-14.0 µm, feeding of materials was stopped.

6. Post-treatment. The material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed. As a result, a high-nickel ternary positive electrode material precursor was obtained, which has a four-layer structure including porous inner parts and a dense shell layer.

### Example 2

In this example, a high-nickel ternary positive electrode material precursor was prepared, which has a four-layer structure including porous inner parts and a dense shell layer (a core, two intermediate layers, and a shell). The high-nickel ternary positive electrode material precursor has a chemical formula Ni_{0.80}Co_{0.10}Mn_{0.10}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 105 g/L was prepared using metal raw materials at a molar ratio of nickel, cobalt, and manganese of 0.80:0.10:0.10.

Caustic soda liquid with a mass fraction of 32% and 20% ammonia aqueous solution were used; and 10 m³ stainless steel reactor and 1.3 m³ stainless steel concentrator were used.

2. First step: production of inner core A by co-precipitation. 5.0 m³ of pure water was added to a reactor 1# as a substrate liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step was formation of porous second intermediate layer structure B by co-precipitation. 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 480 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step was formation of porous third intermediate layer C and dense shell D. 5.5 m³ of pure water was added to a reactor 3#, 80 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 5.5g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 550 L/h. The starting pH was controlled at 10.55.

5. Fourth step was formation of dense shell D. On the basis of the reaction conditions of the third step, the stirring speed for the end-point reaction was adjusted to 60 r/min, and the ending pH was controlled at 10.70. Namely, the stirring speed was reduced, and the pH was raised. In the fourth reaction step, reduction of the stirring speed and the supersaturation of the solution is advantageous for the crystal growth at grain boundaries, and increase of the pH of the system during the fourth reaction is advantageous to stabilize the strength of the crystal grains, thereby forming a dense outer shell structure of the crystal surface.

When a certain liquid level was reached in the reactor, the concentrator was turned on, a slurry was circulated, and a mother liquor was discharged out. When the slurry particle size D50 reached 13.0-14.0 µm, feeding of materials was stopped.

6. Post-treatment. The material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed. As a result, a high-nickel ternary positive electrode material precursor was obtained, which has a four-layer structure including porous inner parts and a dense shell layer.

### Example 3

In this example, a high-nickel positive electrode material precursor was prepared, which has a four-layer structure including porous inner parts and a dense shell layer (a core, two intermediate layers, and a shell). The high-nickel ternary positive electrode material precursor has a chemical formula Ni_{0.90}Co_{0.05}Mn_{0.05}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 110 g/L was prepared using metal raw materials at a molar ratio of nickel, cobalt, and manganese of 0.90:0.05:0.05.

Caustic soda liquid with a mass fraction of 32% and 20% ammonia aqueous solution were used; and 10 m³ stainless steel reactor and 1.3 m³ stainless steel concentrator were used.

2. First step was production of inner core A by co-precipitation. 5.0 m³ of pure water was added to a reactor 1# as a substrate liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step was formation of porous second intermediate layer structure B by co-precipitation. 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 500 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step was formation of porous third intermediate layer C and dense shell D. 5.5 m³ of pure water was added to a reactor 3#, 85 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 5.5g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 600 L/h. The starting pH was controlled at 10.60.

5. Fourth step was formation of dense shell D. On the basis of the reaction conditions of the third step, the stirring speed for the end-point reaction was adjusted to 60 r/min, and the ending pH was controlled at 10.75. Namely, the stirring speed was reduced, and the pH was raised. In the fourth reaction step, reduction of the stirring speed and the supersaturation of the solution is advantageous for the crystal growth at grain boundaries, and increase of the pH of the system during the fourth reaction is advantageous to stabilize the strength of the crystal grains, thereby forming a dense outer shell structure of the crystal surface.

When a certain liquid level was reached in the reactor, the concentrator was turned on, a slurry was circulated, and a mother liquor was discharged out. When the slurry particle size D50 reached 13.0-14.0 µm, feeding of materials was stopped.

6. Post-treatment. The material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed. As a result, a high-nickel ternary positive electrode material precursor was obtained, which has a four-layer structure including porous inner parts and a dense shell layer.

### Example 4

In this example, a high-nickel ternary positive electrode material precursor was prepared, which has a four-layer structure including porous inner parts and a dense shell layer (a core, two intermediate layers, and a shell). The high-nickel ternary positive electrode material precursor has a chemical formula Ni_{0.93}Co_{0.04}Mn_{0.03}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 125 g/L was prepared using metal raw materials at a molar ratio of nickel, cobalt, and manganese of 0.93:0.04:0.03.

Caustic soda liquid with a mass fraction of 32% and 20% ammonia aqueous solution were used; and 10 m³ stainless steel reactor and 1.3 m³ stainless steel concentrator were used.

2. First step was production of inner core A by co-precipitation. 5.0 m³ of pure water was added to a reactor 1# as a substrate liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step was formation of porous second intermediate layer structure B by co-precipitation. 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00.

The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 550 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step was formation of porous third intermediate layer C and dense shell D. 5.5 m³ of pure water was added to a reactor 3#, 90 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 5.5g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 650 L/h. The starting pH was controlled at 10.65.

5. Fourth step was formation of dense shell D. On the basis of the reaction conditions of the third step, the stirring speed for the end-point reaction was adjusted to 60 r/min, and the ending pH was controlled at 10.85. Namely, the stirring speed was reduced, and the pH was raised. In the fourth reaction step, reduction of the stirring speed and the supersaturation of the solution is advantageous for the crystal growth at grain boundaries, and increase of the pH of the system during the fourth reaction is advantageous to stabilize the strength of the crystal grains, thereby forming a dense outer shell structure of the crystal surface.

When a certain liquid level was reached in the reactor, the concentrator was turned on, a slurry was circulated, and a mother liquor was discharged out. When the slurry particle size D50 reached 13.0-14.0 µm, feeding of materials was stopped.

6. Post-treatment. The material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed. As a result, a high-nickel ternary positive electrode material precursor was obtained, which has a four-layer structure including porous inner parts and a dense shell layer.

### Comparative Example 1

In this comparative example, a high-nickel ternary positive electrode material precursor was prepared, which has a three-layer structure including dense inner parts and a less-porous shell layer (a core, an intermediate layer, and a shell). The high-nickel ternary positive electrode material precursor has a chemical formula Ni_{0.85}Co_{0.10}Mn_{0.05}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 110 g/L was prepared using metal raw materials at a molar ratio of nickel, cobalt, and manganese of 0.85:0.10:0.05.

Caustic soda liquid with a mass fraction of 32% and 20% ammonia aqueous solution were used; and 10 m³ stainless steel reactor and 1.3 m³ stainless steel concentrator were used.

2. First step: 5.0 m³ of pure water was added to a reactor 1# as a substrate liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step: 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 500 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step: 5.5 m³ of pure water was added to a reactor 3#, 75 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 7.5 g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 500 L/h. The starting pH was controlled at 10.45, and the ending pH was controlled at 10.60. The stirring speed for the reaction at the end stage was gradually decreased to 60 r/min. When a certain liquid level was reached in the reactor, the concentrator was turned on, a slurry was circulated, and a mother liquor was discharged out. When the slurry particle size D50 reached 13.0-14.0 µm, feeding of materials was stopped.

5. Post-treatment: the material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed.

Compared with the examples, the steps and the ternary metal flow rates of Comparative Example 1 were basically the same as the examples. In the comparative example, the ending pH and the aqueous ammonia concentration were adjusted, and a ternary positive electrode material precursor having an internal three-layer dense structure can be obtained.

### Comparative Example 2

In this comparative example, a high-nickel ternary positive electrode material precursor was prepared, which has a two-layer structure including a dense inner part and a less-porous shell layer (a core and a shell). The high-nickel ternary positive electrode material precursor has a chemical formula Ni_{0.80}Co_{0.15}Mn_{0.05}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 110 g/L was prepared using metal raw materials at a molar ratio of nickel, cobalt, and manganese of 0.80:0.15:0.05.

Caustic soda liquid with a mass fraction of 32% and 20% ammonia aqueous solution were used; and 10 m³ stainless steel reactor and 1.3 m³ stainless steel concentrator were used.

2. First step: 5.0 m³ of pure water was added to a reactor 1# as a substrate liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20. When a certain liquid level was reached in the reactor, the concentrator was turned on, a slurry was circulated, and a mother liquor was discharged out. When the slurry particle size D50 reached 2.0-3.0 µm, feeding of materials was stopped.

3. Second step: 1.8 m³ of the slurry in the first step was quantitatively taken and transferred into a reactor 2#, and pure water was added to reach 5.0 m³. The stirring speed was controlled at 220 r/min, and aqueous ammonia and caustic soda liquid were added to adjust the ammonia concentration of the system to 4.0 g/L and pH to 11.00. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 500 L/h. When a certain liquid level was reached in the reactor, the concentrator was turned on, a slurry was circulated, and a mother liquor was discharged out. When the slurry particle size D50 reached 3.0-5.0 µm, feeding of materials was stopped. Water removal was performed to obtain a dry base material.

4. Third step: 5.0 m³ of pure water was added to a reactor 3#, 75 kg of the dry base material obtained by water removal in the second step was quantitatively fed. The aqueous ammonia and caustic soda liquid were added under stirring speed at 180 r/min to adjust the ammonia concentration and pH value, and the ammonia concentration of the system was adjusted to 8.0 g/L. The temperature was raised to 60°C. Then, the ternary mixed solution, ammonia aqueous solution, and sodium hydroxide solution were simultaneously fed for co-precipitation reaction. Here, the ternary metal flow rate increased stepwise, the starting ternary metal flow rate was 200 L/h, and the ending ternary metal flow rate was 500 L/h. The starting pH was controlled at 10.40, and the ending pH was controlled at 10.55. The stirring speed for the reaction at the end stage was gradually decreased to 60 r/min. When a certain liquid level was reached in the reactor, the concentrator was turned on, a slurry was circulated, and a mother liquor was discharged out. When the slurry particle size D50 reached 13.0-14.0 µm, feeding of materials was stopped.

5. Post-treatment: the material after the reaction was stopped was washed with an appropriate amount of dilute alkali and pure water, and the Na and S contents of the washed material were less than 400 ppm and 3000 ppm respectively. The solid particle material after washing was dried at 100°C for 24 hours, sieved through a 400-mesh screen, packaged, and sealed.

Compared with the examples, the steps and the ternary metal flow rates of Comparative Example 2 were basically the same as the examples. In the comparative example, the ending pH and the aqueous ammonia concentration were adjusted, and a ternary positive electrode material precursor having an internal two-layer dense structure with less pores can be obtained.

### Comparative Example 3

In this comparative example, a high-nickel ternary positive electrode material precursor was prepared through 2 steps. The high-nickel ternary positive electrode material precursor has an internal dense structure (a core and a shell) and a chemical formula Ni_{0.85}Co_{0.10}Mn_{0.05}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 110 g/L was prepared using metal raw materials at a molar ratio of nickel, cobalt, and manganese of 0.85:0.10:0.05.

Caustic soda liquid with a mass fraction of 32% and 20% ammonia aqueous solution were used; and 10 m³ stainless steel reactor and 1.3 m³ stainless steel concentrator were used.

2. First step: 8.0 m³ of pure water was added to a reactor 1# as a bottom liquid, aqueous ammonia and caustic soda liquid were added to adjust the ammonia concentration of the system to 4.0 g/L and pH to 11.90. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate increased stepwise, the starting ternary metal flow rate was 100 L/h, and the ending ternary metal flow rate was 500 L/h. The ending pH was adjusted to 11.20.

When a certain liquid level was reached in the reactor, the concentrator was turned on, a slurry was circulated, and a mother liquor was discharged out. When the slurry particle size D50 reached 3.0-5.0 µm, feeding of materials was stopped.

3. Second step: 80 kg of the dry base material obtained by water removal of the slurry in the first step was transferred into a reactor 2#, and pure water was added to reach 5.0 m³. The stirring speed was controlled at 220 r/min, and aqueous ammonia and caustic soda liquid were added to adjust the ammonia concentration of the system to 6.0 g/L and pH to 10.80. The temperature was raised to 60°C. The ternary metal mixed solution, aqueous ammonia solution, and sodium hydroxide solution were simultaneously fed for co-precipitation reaction. Here, the ternary metal flow rate increased stepwise, the starting ternary metal flow rate was 200 L/h, and the ending ternary metal flow rate was 600 L/h. During the reaction process, the stirring speed gradually decreased, and the ending stirring speed was 100 r/min. The pH of the reaction system gradually increased, and the ending pH is 11.20.

When a certain liquid level was reached in the reactor, the concentrator was turned on, a slurry was circulated, and a mother liquor was discharged out. When the slurry particle size D50 reached 12.0-14.0 µm, feeding of materials was stopped.

Compared with the examples, Comparative Example 3 included two steps. The pH of the system in the second step was gradually increased, and the ending pH reached 11.20, which is basically the same as the ending pH of the first step. A ternary precursor material having an internal dense structure (a core and a shell) was obtained. The four-layer ternary precursor material including porous inner parts and a dense shell in the examples was not obtained.

### Comparative Example 4

In this comparative example, a low-nickel (5-series) ternary positive electrode material precursor was prepared, which has a structure including a dense inner part and no pores and layers. The ternary positive electrode material precursor has a chemical formula Ni_{0.50}Co_{0.20}Mn_{0.30}(OH)₂.

The preparation method was as follows.
1. Selection of materials. Nickel sulfate (NiSO₄•6H₂O), cobalt sulfate (CoSO₄•7H₂O), and manganese sulfate (MnSO₄•H₂O) were used.

A ternary metal salt mixed solution with a concentration of 110 g/L was prepared using metal raw materials at a molar ratio of nickel, cobalt, and manganese of 0.50:0.20:0.30.

Caustic soda liquid with a mass fraction of 32% and 20% ammonia aqueous solution were used; and 10 m³ stainless steel reactor and 1.3 m³ stainless steel concentrator were used.

2. First step: 8.0 m³ of pure water was added to a reactor 1# as a substrate liquid, aqueous ammonia and caustic soda liquid were added to adjust the ammonia concentration of the system to 4.0 g/L and pH to 10.95. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, the ternary metal flow rate was 500 L/h, the flow rate of caustic soda liquid was 185 L/h, and the flow rate of aqueous ammonia was 17 L/h. When a certain liquid level was reached in the reactor, a mother liquor was discharged out, and the concentration of the materials accordingly increased. When the slurry particle size D50 was controlled to a stable level that is 7.0-9.0 µm, feeding of materials into the reaction system was stopped.

3. Second step: 7.5 m³ of the slurry in the first step was quantitatively taken and transferred into a reactor 2#, and aqueous ammonia and caustic soda liquid were added to adjust the ammonia concentration of the system to 5.0 g/L and pH to 10.80. The reaction temperature was raised to 60°C, and the stirring speed was controlled at 220 r/min. After these conditions were reached, nickel-cobalt-manganese ternary metal mixed solution, caustic soda liquid, and aqueous ammonia were simultaneously fed for co-precipitation reaction. Here, during the reaction process, the ternary metal flow rate, the stirring rotation speed, and the pH remained unchanged.

When a certain liquid level was reached in the reactor, the concentrator was turned on, a slurry was circulated, and a mother liquor was discharged out. When the slurry particle size D50 reached 10.0-13.0 µm, feeding of materials was stopped.

Compared with the examples, the low-nickel ternary positive electrode material precursor of Comparative Example 4 was prepared through two steps in which the stirring rotation speed was high and the flow rates and pH were unchanged. A structure including a dense inner part was obtained without pores and layers. The four-layer ternary positive electrode material precursor including porous inner parts and a dense shell in the examples could not be obtained.

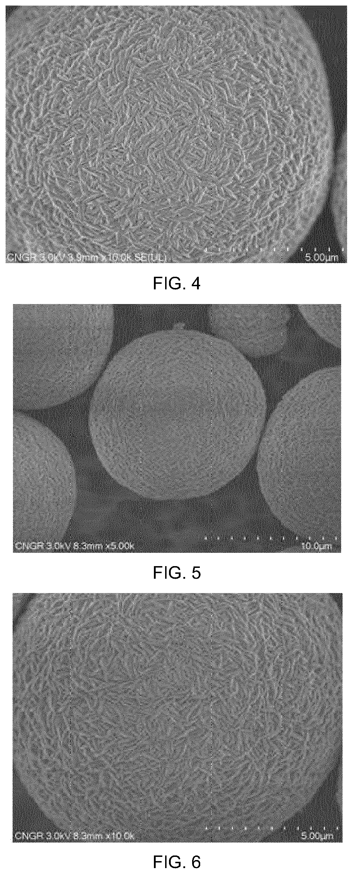

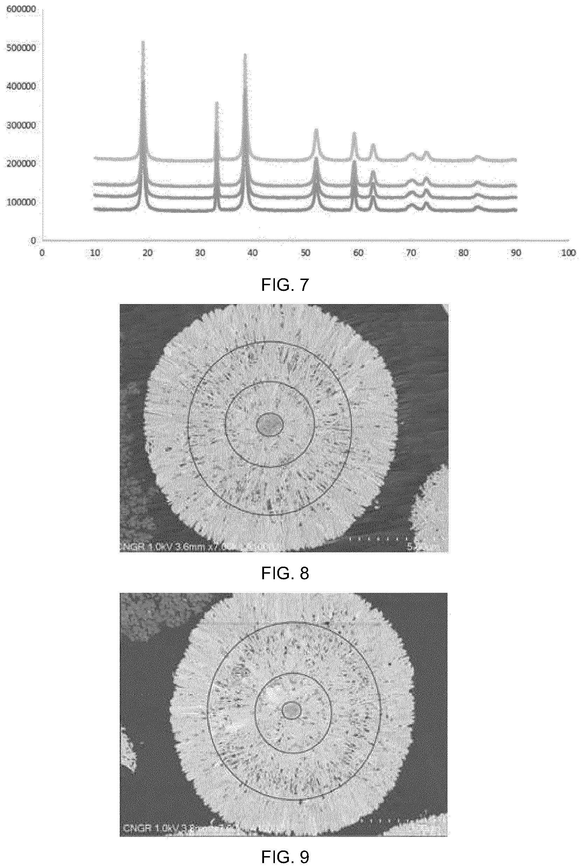

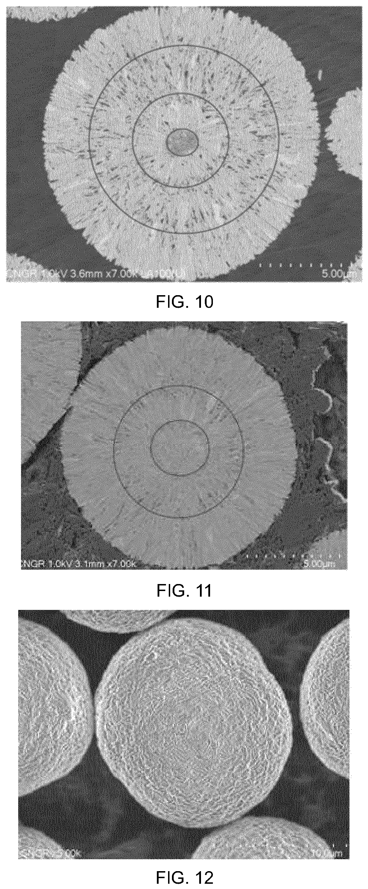

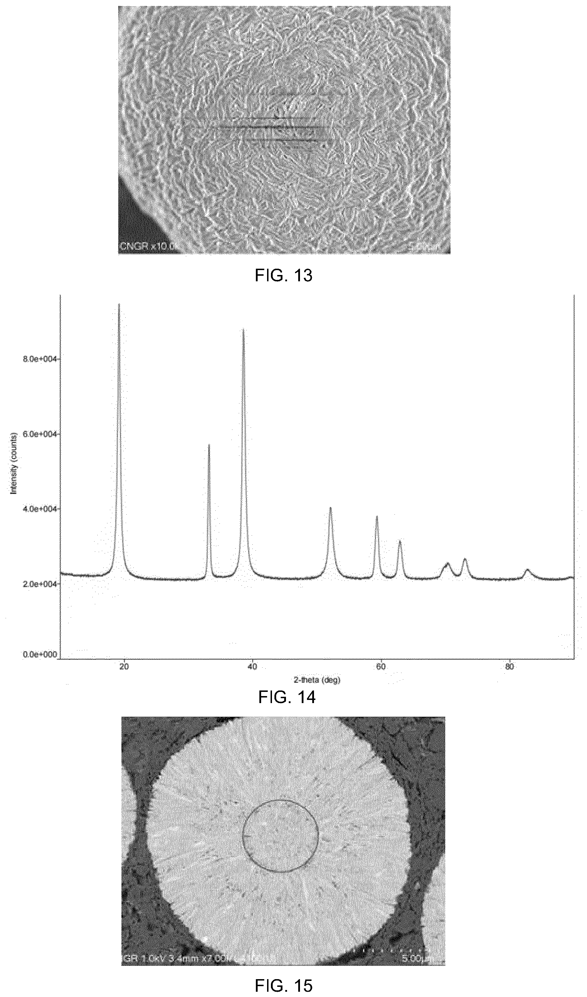

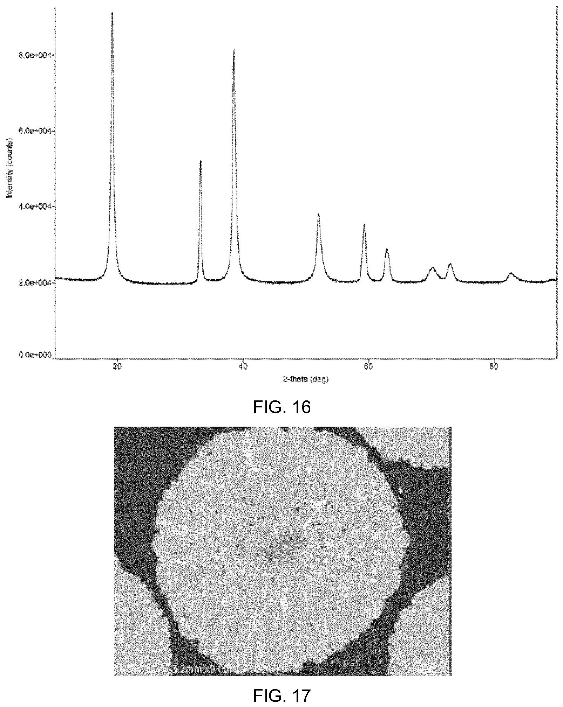

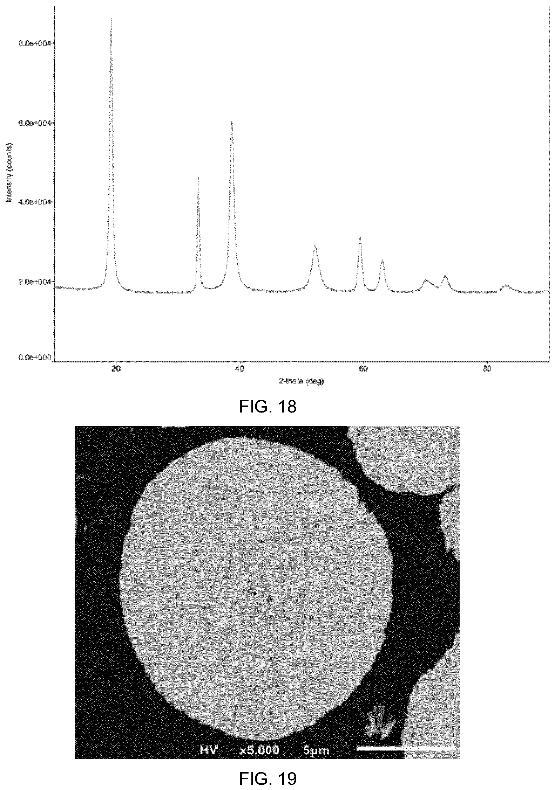

The precursors obtained in the examples and comparative examples were tested, and the results are shown in FIGS. 2 to 19. Specifically, FIG. 2 is a sectional SEM image of the ternary positive electrode material precursor obtained in Example 1; FIG. 3 is a high-magnification SEM image of the ternary positive electrode material precursor obtained in Example 1; FIG. 4 is a local high-magnification SEM image of the ternary positive electrode material precursor obtained in Example 1; FIG. 5 is a high-magnification SEM image of the ternary positive electrode material precursor obtained in Example 2; FIG. 6 is a local high-magnification SEM of the ternary positive electrode material precursor obtained in Example 2; FIG. 7 is an XRD spectrum of the ternary positive electrode material precursors obtained in Examples 1, 2, 3, and 4 (calculation on the right, shown for Example 3, Example 4, Example 2, and Example 1 sequentially from the top to the bottom); FIG. 8 is a sectional SEM image of the ternary positive electrode material precursor obtained in Example 2; FIG. 9 is a sectional SEM image of the ternary positive electrode material precursor obtained in Example 3; FIG. 10 is a sectional SEM image of the ternary positive electrode material precursor obtained in Example 4; FIG. 11 is a sectional SEM image of the ternary positive electrode material precursor obtained in Comparative Example 1; FIG. 12 is a high-magnification SEM image of the ternary positive electrode material precursor obtained in Comparative Example 1; FIG. 13 is a local high-magnification SEM image of the ternary positive electrode material precursor obtained in Comparative Example 1; FIG. 14 is a XRD spectrum of the ternary positive electrode material precursor obtained in Comparative Example 1; FIG. 15 is a sectional SEM image of the ternary positive electrode material precursor obtained in Comparative Example 2; FIG. 16 is a XRD spectrum of the ternary positive electrode material precursor obtained in Comparative Example 2; FIG. 17 is a sectional SEM image of the ternary positive electrode material precursor obtained in Comparative Example 3; FIG. 18 is a XRD spectrum of the ternary positive electrode material precursor obtained in Comparative Example 3; and FIG. 19 is a sectional SEM image of the ternary positive electrode material precursor obtained in Comparative Example 4.

It can be seen from FIG. 2, FIG. 8, FIG. 9, and FIG. 10 that the ternary precursors obtained in the examples each have a four-layer structure including a core, two intermediate layers, and a shell, and present a four-layer structure including porous inner parts and a dense and less-porous shell layer.

It can be seen from FIG. 11 that the precursor obtained in Comparative Example 1 has a three-layer structure including a core, one intermediate layer, and a shell, and the inner parts and the shell layer are less-porous and dense.

It can be seen from FIGS. 15 and 17 that the precursors obtained in Comparative Example 2 and Comparative Example 3 has a two-layer structure including a core and a shell, and the inner part and the shell layer are less-porous and dense.

It can be seen from FIG. 19 that the precursor obtained in Comparative Example 4 (low-nickel) has an inner part and a shell layer that are less-porous and dense, and has no layered structure.

The performance parameters of the ternary positive electrode material precursors obtained in the examples and comparative examples are listed in Table 1.

**Table 1: Performance parameters**

| Item | BET | Porosity% | | | | XRD | | | D50 | Standard width of particle size distribution |
|---|---|---|---|---|---|---|---|---|---|---|
| | m2/g | Core layer (A) | First intermediate layer (B) | Second intermediate layer (C) | Shell layer (D) | half-peak width of (001) α | half-peak width ratio FWHM(101/001) | Peak intensity ratio I (001/101) | µm | D95/D50 |
| Example 1 | 13.89 | 3.42 | 3.86 | 8.32 | 0.34 | 0.477 | 1.130 | 1.135 | 13.559 | 1.192 |
| Example 2 | 13.58 | 3.20 | 3.96 | 8.58 | 0.18 | 0.476 | 1.102 | 1.120 | 13.544 | 1.196 |
| Example 3 | 14.12 | 2.89 | 4.20 | 9.55 | 0.22 | 0.478 | 1.125 | 1.111 | 13.536 | 1.188 |
| Example 4 | 13.66 | 3.82 | 4.45 | 9.88 | 0.13 | 0.480 | 1.121 | 1.127 | 13.588 | 1.188 |
| Comparative Example 1 | 12.12 | 1.85 | 2.25 | | 0.23 | 0.509 | 1.064 | 1.053 | 13.513 | 1.195 |
| Comparative Example. 2 | 12.05 | 2.15 | 1.04 | | | 0.547 | 1.077 | 1.077 | 13.592 | 1.186 |
| Comparative Example 3 | 7.9 | 2.25 | 0.11 | | | 0.540 | 1.280 | 1.292 | 12.297 | 1.472 |
| Comparative Example 4 | 5.5 | 0.09 | | | | 0.355 | 2.204 | 2.322 | 10.895 | 1.761 |

2000 g of each of the precursors prepared in the examples and LiOH·H₂O were uniformly mixed at a molar ratio of 1:1.03 by a high-speed mixer, and sintered in a chamber furnace under an air atmosphere. The sintering temperature was 780°C, and the high-temperature sintering time was 12h. The sintered product was cooled to room temperature, pulverized, and sieved to obtain a nickel-cobalt-manganese ternary single-crystal positive electrode material.

A buckle half-cell was used for electrochemical performance test. The above-mentioned positive electrode material, a conductive carbon black, and a binder PVDF (polyvinylidene fluoride) were mixed at a ratio of 8:1:1 into a slurry, and the slurry was applied onto an aluminum foil to make a positive electrode. A metal lithium sheet was used as the negative electrode. The electrolyte was 1 mol/L LiPF₆ /EC:DMC (volume ratio 1:1). A cell case, positive and negative electrode sheets, a separator, a shrapnel, and a gasket were assembled into a buckle cell in a vacuum glove box. The electrochemical performance was tested using a LAND test system.

1C cycle test was carried out for 50 cycles under the condition of 3.0-4.3V at room temperature. The electrochemical performance is shown in Table 2.

**Table 2: Electrochemical performance**

| Item | First discharge efficiency at 0.1C | 1C discharge efficiency | 1C 50-cycle discharge efficiency | Rate capability | Retention rate for 50 cycles |
|---|---|---|---|---|---|
| | mAh/g | mAh/g | mAh/g | | |
| Example 1 | 199.8 | 187.8 | 184.3 | 93.99% | 98.14% |
| Example 2 | 200.1 | 187.0 | 182.8 | 93.45% | 97.75% |
| Example 3 | 199.9 | 188.5 | 184.7 | 94.30% | 97.98% |
| Example 4 | 199.1 | 189.5 | 186.9 | 95.18% | 98.63% |
| Comparative Example 1 | 198.1 | 180.0 | 166.6 | 90.86% | 92.56% |
| Comparative Example 2 | 199.8 | 181.7 | 167.2 | 90.94% | 92.02% |
| Comparative Example 3 | 198.5 | 177.6 | 162.6 | 89.47% | 91.55% |
| Comparative Example 4 | 173.5 | 154.4 | 140.4 | 88.99% | 90.93% |

It can be seen from Table 1 that, the ternary precursor particles of Examples 1, 2, 3, and 4 each have a four-layer stable structure including porous inner parts and a dense outer shell, which is improved compared with two- or three-layer dense structure of Comparative Example 1, 2, or 3. Comparative Example 4 (low-nickel) is a non-layered dense structure. The ternary precursors having a stable structure including porous inner parts and a dense outer shell in the examples have a porosity higher than those of the comparative examples, and the particle structures thereof are not prone to cracking during charge and discharge. The structural and electrochemical properties of the product particles are better.

It can be seen from Table 1 that, compared with Comparative Examples 3 and 4, the particle-size distribution widths in Examples 1, 2, 3, and 4 are all within the range of 1.20±0.05, the particle sizes present a narrow distribution, and the distribution is more uniform.

It can be seen from Table 1, according to XRD diffraction, the half-peak widths of the (001) peak in the examples are all smaller than those of Comparative Examples 1, 2, and 3. In each of the examples, the FWHM (101/001) ratio is 1.1-1.2, and the I (001/101) is 1.1-1.2. That is, the half-peak width of the (001) peak is less than that of the (101) peak, and the intensity of the (001) peak is higher than that of the (101) peak, proving that the material of each of the examples grows preferentially at the (001) peak and has better crystallinity and more stable structure. Comparative Example 4 (low-nickel product) is a substance having low nickel, high cobalt and high manganese ratios and having a large unit cell parameter, a smaller half-peak width of the (001) peak, and high intensity of the (001) peak. Due to the different ratio, no comparison is made. From the electrochemical performance in Table 2, it can be seen that high nickel products have better electrochemical performance.

It can be seen from the electrochemical performance in Table 2 that, the rate capabilities in the examples reach 93.45%-95.18%, which are higher than those of Comparative Examples 1, 2, 3, and 4 by 2.49%-6.19%; and the cycle life in the examples reaches 97.75%-98.63%, which is higher than that of Comparative Examples 1, 2, 3, and 4 by 5.19%-7.70%.

Therefore, the high-nickel ternary positive electrode material precursor of the present application exerts more excellent performance.

The ternary positive electrode material precursor provided by the present application has a four-layer structure in the particle that breaks through the existing dense structure, the internal structure presents a multi-layer porous stable structure. The ternary positive electrode material precursor provided by the present application further provides a new direction for the internal layer structure of the ternary precursor particle of positive electrode material.

Finally, it should be noted that the above examples are only used to illustrate the technical solutions of the present application, but not to limit them. Although the present application has been described in detail with reference to the foregoing examples, those of ordinary skill in the art should understand that the technical solutions described in the foregoing examples may be modified, or some or all of the technical features thereof can be equivalently replaced. These modifications or replacements do not make the essence of the corresponding technical solutions deviate from the scope of the technical solutions of the examples of the present application. Furthermore, those skilled in the art will appreciate that although some of the examples herein include certain features, but not others, included in other examples, the combinations of features of different examples are intended to be within the scope of the present application and form different examples. For example, in the appending claims, any of the claimed embodiments may be used in any combination. The information disclosed in the Background section is only for enhancement of understanding of the general background of the present application and should not be regarded as an acknowledgement or any form of suggestion that this information forms the prior art already known to a person skilled in the art.

## Claims

1. A ternary positive electrode material precursor, **characterized by** comprising, sequentially from inside to outside, a core layer, a first intermediate layer, a second intermediate layer, and a shell layer, wherein a porosity of the core layer, the first intermediate layer, and the second intermediate layer increases in sequence, and the shell layer has the smallest porosity or no porosity.

2. The ternary positive electrode material precursor according to claim 1, wherein a porosity of the core layer is 1.40%-7.96%, a porosity of the first intermediate layer is 2.10%-8.37%, a porosity of the second intermediate layer is 4.57%-16.72%, and a porosity of the shell layer is less than or equal to 1%; and
preferably, the porosity of the core layer is 2.0%-4.0%, the porosity of the first intermediate layer is 3.0%-5.0%, the porosity of the second intermediate layer is 7.35%-10.32%, and the porosity of the shell layer is less than or equal to 0.5%.

3. The ternary positive electrode material precursor according to claim 1, wherein each layer of the ternary positive electrode material precursor has an average thickness less than or equal to 3 µm; and
preferably, the core layer has a diameter of 1.0 µm-3.0 µm, the first intermediate layer has an average thickness of 0.2 µm-2.0 µm, the second intermediate layer has an average thickness of 1 µm-2.5 µm, and the shell layer has an average thickness of 0.5 µm-1.5 µm.

4. The ternary positive electrode material precursor according to claim 1, wherein primary particles in the ternary positive electrode material precursor are distributed in a shape of loosely intersecting needle strips from inside to outside along a radial direction thereof;
preferably, the core layer is spherical as a whole; and
preferably, primary particles in the shell layer are in a shape of needle strip along the radial direction of the ternary positive electrode material precursor.

5. The ternary positive electrode material precursor according to claim 1, wherein the ternary positive electrode material precursor has an average particle size of 12 µm-15 µm;
preferably, D95/D50 is 1.0-1.6; and
preferably, the ternary positive electrode material precursor has a BET of 11 m²/g-17 m²/g.

6. The ternary positive electrode material precursor according to claim 1, wherein a half-peak width α of a (001) peak at a diffraction angle 2θ of 19.2±1° is less than or equal to 0.6;
preferably, the half-peak width α is 0.43-0.53;
preferably, a half-peak width β of a (101) peak at a diffraction angle 2θ of 38.5±1° is less than or equal to 0.7;
preferably, the half-peak width β is 0.48-0.58;
preferably, a ratio of the half-peak width β to the half-peak width α is greater than or equal to 1.02, and a peak intensity ratio I (001/101) is 1.0-1.2; and
preferably, the ratio of the half-peak width β to the half-peak width α is 1.02-1.25.

7. The ternary positive electrode material precursor according to any one of claims 1-6, wherein the ternary positive electrode material precursor has a general chemical formula NiₓCo_{y}Mn_{z}(OH)₂, where 0.8≤x≤0.98, 0.01≤y<0.18, 0.01≤z<0.17, and x+y+z=1.

8. A preparation method of a ternary positive electrode material precursor, **characterized by** comprising:
performing a first reaction of raw materials comprising a nickel-cobalt-manganese ternary mixed solution, a complexing agent, and a pH modifier to obtain a core layer;
performing a second reaction by adjusting reaction conditions to form a first intermediate layer on a surface of the core layer;
performing a third reaction by adjusting reaction conditions to form a second intermediate layer on a surface of the first intermediate layer; and
performing a fourth reaction by adjusting reaction conditions to form a shell layer on a surface of the second intermediate layer.

9. The preparation method according to claim 8, wherein the first reaction, the second reaction, the third reaction, and the fourth reaction are all carried out under stirring, and stirring speeds decrease in sequence; and
preferably, a stirring speed for the first reaction is 200 r/min-240 r/min, a stirring speed for the second reaction is 180 r/min-230 r/min, a stirring speed for the third reaction is 100 r/min-200 r/min, and a stirring speed for the fourth reaction is 40 r/min-100 r/min.

10. The preparation method according to claim 8, wherein addition amounts of the nickel-cobalt-manganese ternary mixed solution during the first reaction, the second reaction, the third reaction, and the fourth reaction increase in sequence;
preferably, during the first reaction, an addition amount of the nickel-cobalt-manganese ternary mixed solution is 80 L/h-550 L/h; during the second reaction, an addition amount of the nickel-cobalt-manganese ternary mixed solution is 150 L/h-650 L/h; and during the third reaction and the fourth reaction, an addition amount of the nickel-cobalt-manganese ternary mixed solution is 150 L/h-750 L/h;
preferably, during the first reaction, the second reaction, the third reaction, and the fourth reaction, the addition amount of the nickel-cobalt-manganese ternary mixed solution in these reaction processes increases stepwise; and
preferably, the stepwise increase ratio is 10%-100%.

11. The preparation method according to claim 8, wherein during the first reaction, the second reaction, and the third reaction, the pH of system decreases gradually; and the pH of system during the fourth reaction is higher than that of the third reaction;
preferably, during the first reaction, the second reaction, the third reaction, and the fourth reaction, the pH of the system ranges from 10 to 12; and
preferably, the pH of the system during the fourth reaction is 0.10-0.30 higher than that of the third reaction.

12. The preparation method according to any one of claims 8-11, wherein a concentration of the nickel-cobalt-manganese ternary mixed solution is 90-130 g/L; preferably, the complexing agent comprises one or more of aqueous ammonia, EDTA, ethylenediamine, sodium citrate, and urea;
preferably, the complexing agent is aqueous ammonia with a mass fraction of 15%-35%;
preferably, in the first reaction, the second reaction, the third reaction, and the fourth reaction, a concentration of the aqueous ammonia in system is 2.5 g/L-6.5 g/L;
preferably, a concentration of the aqueous ammonia in the system during the third reaction and the fourth reaction is higher than a concentration of the aqueous ammonia during the second reaction by 1.0-3.0 g/L;
preferably, the pH modifier comprises one or more of sodium hydroxide, potassium hydroxide, sodium bicarbonate, and sodium carbonate; and
preferably, the pH modifier is an aqueous sodium hydroxide solution with a mass fraction of 25%-50%.

13. A ternary positive electrode material, **characterized by** comprising, sequentially from inside to outside, a layer A, a layer B, a layer C, and a layer D, wherein porosities of the layer A, the layer B, and the layer C increase in sequence, and the D layer has a smallest porosity or no porosity; and
preferably, the ternary positive electrode material is obtained by firing the ternary positive electrode material precursor according to any one of claims 1-7.

14. A positive electrode for a lithium-ion battery, **characterized by** comprising the ternary positive electrode material according to claim 13.

15. A lithium-ion battery, **characterized by** comprising the positive electrode for a lithium-ion battery according to claim 14.

16. An electric-involved equipment, **characterized by** comprising the lithium-ion battery according to claim 15.
